Europäisches Patentamt

European Patent Office

Office européen des brevets

(11) Veröffentlichungsnummer: **0 021 256**

**A1**

(12) **EUROPÄISCHE PATENTANMELDUNG**

(21) Anmeldenummer: **80103257.4**

(22) Anmeldetag: **11.06.80**

(51) Int. Cl.³: **F 16 B 2/08**

(30) Priorität: **25.06.79 DE 2925606**
　　　　　　**10.03.80 DE 3009072**

(43) Veröffentlichungstag der Anmeldung: **07.01.81**
　　**Patentblatt 81/1**

(84) Benannte Vertragsstaaten: **AT BE CH FR GB IT LI LU NL
SE**

(71) Anmelder: **Henning, Wolfgang, Dütlingstalweg 6,
D-3538 Marsberg (DE)**

(72) Erfinder: **Henning, Wolfgang, Dütlingstalweg 6,
D-3538 Marsberg (DE)**

(74) Vertreter: **Staeger, Sigurd, Dipl.-Ing. et al, Patentanwälte
Dr.-Ing. H. Fincke Dipl.-Ing. H. Bohr, Dipl.-Ing. S. Staeger
Müllerstrasse 31, D-8000 München 5 (DE)**

(54) Schelle für ein Spannband mit sich jeweils überlappenden Endabschnitten.

㉗ Schelle für ein Spannband (2) mit sich jeweils überlappenden Endabschnitten mit einer in einem Spanngehäuse (8) drehbar gelagerten, den einen Spannbandabschnitt
relativ zum Spanngehäuse (8) beweglich führenden Spannschraube (5), wobei der andere Spannbandabschnitt am
Spanngehäuseboden (10) arretierbar ist, zweimal gegenläufig durch einen Querschlitz (14) od. dgl. im Spanngehäuseboden (10) hindurchgeführt ist und durch auf der dem
Spannband (2) abgekehrten Seite des Spanngehäusebodens (10) vorgesehene Abbiegungen (16) gegen selbsttätiges Herausziehen arretiert ist.

---

Schelle für ein Spannband mit sich jeweils
überlappenden Endabschnitten

---

Die Erfindung bezieht sich auf eine Schelle für ein Spannband mit sich jeweils überlappenden Endabschnitten mit einer in einem Spanngehäuse drehbar gelagerten, den einen Spannbandendabschnitt relativ zum Spanngehäuse beweglich führenden Spannschraube, wobei der andere Spannbandendabschnitt am Spanngehäuseboden arretierbar ist.

Nach einer bekannten Ausführungsform einer Spannschelle wird das mit dem Spanngehäuse verbundene Ende des Spannbandes nur einmal um 180° umgebogen, während das andere Ende des Spannbandes durch die gleiche Öffnung hindurchgeführt ist und mit dem Spannschraubenende in Eingriff steht. Da der durch die Spannschelle umschlungene Gegenstand im Bereich der Bodenöffnung nicht vom Spannband abgedeckt ist, können z.B. bei empfindlichen Schläuchen Quetschungen, Faltungen oder dergleichen auftreten.

Der Erfindung liegt die Aufgabe zugrunde, eine Spannschelle des eingangs erwähnten Typs zu schaffen, bei der das Spannband selbst praktisch vollständig den Bereich unter dem Spanngehäuse abdeckt.

Die Aufgabe wird dadurch gelöst, daß erfindungsgemäß der arretierbare Spannbandabschnitt zweimal gegenläufig durch einen Querschlitz oder dergleichen im Spanngehäuseboden hindurchgeführt und durch auf der dem Spannband abgekehrten Seite des Spanngehäusebodens vorgesehene Abbiegungen oder Abkröpfungen gegen selbsttätiges Herauslösen arretiert ist.

Auf diese Weise wird es möglich, das unbewegliche, mit dem Spanngehäuseboden zu verbindende Bandende so einzubringen, daß das freie Ende wieder aus der Öffnung herausgeführt wird und das andere Spannbandende von unten vollständig abdeckt. Da die Abdeckung im ungefalteten Zustand, d.h. also mit dem glatten, freien Ende des Bandes erfolgt, liegt praktisch keine Spannverbindung vor, die Faltungen oder dergleichen am Schlauch herbeiführen könnte. Beim Spannen durch Anziehen der Spannschraube bewegt sich das überlappte freie Spannbandende in Kreisrichtung, so daß auch hierbei im Schlauch oder dergleichen keine Faltungen oder dergleichen entstehen können.

Die Erfindung ist besonders gut bei einer Spannschelle anwendbar, bei der das eine Ende des Spannbandes als eine Tasche oder dergleichen ausgebildet und das andere Ende mindestens im Bereich des Spanngehäusebodens das Spannband frei unterlappt. Gerade bei einer derartigen bekannten Ausführung der Spannschelle ist die Verbindung des einen Spannbandendabschnittes mit dem Spanngehäuseboden besonders zweckmäßig.

Vorzugsweise ist das Spannband im Bereich des Schlitzes oberhalb der Bodenwandung des Spanngehäusebodens zweimal um ca. 180° annähernd gegenläufig abgebogen bzw. abgekröpft.

Nach einer abgewandelten Ausführungsform der Erfindung ist der arretierbare Spannbandendabschnitt im Querschlitz oder dergleichen lose einhängbar und sind an der letzten, zum Spannbandende weisenden Abbiege- oder Abkröpfungsstelle des Spannbandendabschnittes Sicken , Rippen, Vorsprünge oder dergleichen vorgesehen.

Durch diese Ausführungsform wird eine vollständig gesonderte Fertigung von Spanngehäuse und Spannband ermöglicht. Die Zusammensetzung dieser beiden Teile erfolgt - z.B. nach einem getrennten Transport - durch einfaches Einhängen des Spanngehäuses am Verwendungsort. Die Sicken oder dergleichen erhöhen auch die Sicherheit gegen selbsttätiges Herauslösen.

Zweckmäßigerweise sind mindestens zwei parallele Querschlitze oder dergleichen zum wahlweisen Einhängen des Spannbandendabschnittes vorgesehen. Hierdurch ist es möglich, das Spannband am Verwendungsort so einzuhängen, daß die Spannschraubenbetätigung verringert werden kann.

Auf der Zeichnung sind mehrere Ausführungsbeispiele der Erfindung dargestellt; sie werden nachfolgend näher beschrieben; es zeigt:

Fig 1 einen Längsschnitt durch eine Ausführungsform mit den beiden Spannbandendabschnitten,

Fig 2 eine Draufsicht auf die Schelle nach Fig. 1, jedoch ohne Spannbandendabschnitte,

Fig 3 bis 5 drei verschiedene Ausführungsformen im Detail,

Fig 6 einen Längsschnitt durch eine weitere Ausführungsform,

Fig 7 eine Draufsicht auf die Ausführungsform nach Fig.6 jedoch ohne Spannband,

Fig 8 einen vergrößerten Längsschnitt durch ein Detail und

Fig 9 eine Draufsicht auf einen Spannbandendabschnitt.

Um ein Rohr oder einen Schlauch 1 ist ein Spannband 2 geschlungen, von dem ein Ende 3 in einer nicht näher dargestellten Tasche in Form einer Halbrundbuchse endet, welche wiederum durch ein Hütchen 4 eingespannt gehalten ist; dieses Hütchen besteht aus einem nahtlosen Stück und verhindert eine Verformung des Spannbandendes 3 bei einem Verdrehen bzw. Spannen durch eine Spannschraube 5.

Die Spannschraube 5 ist in einem Gewinde 6 einer Stirnwand 7 eines Spanngehäuses 8 drehbar gelagert.

Das Spannbandende 3 ist durch eine breite Öffnung 9 im Boden 10 des Spanngehäuses 8 hindurchgeführt. Das Spanngehäuse 8 besteht aus einem Stück und wird in einem Arbeitsgang geformt, wobei die beiden Seitenwände 11 und 12 mit dem Boden 10 und der Stirnwand 7 einstückig verbunden und an den jeweiligen Übergangsstellen Abrundungen 13 vorgesehen sind.

Bei dem z.B. aus Metall bestehenden einstückigen Spanngehäuse 8 sind die Seitenwände 11 und 12 so weit nach oben gezogen, daß z.B. Fingerverletzungen beim Spannvorgang weitgehend vermieden werden. Das Spanngehäuse 8 kann jedoch auch anders ausgebildet sein bzw. eine andere Form haben.

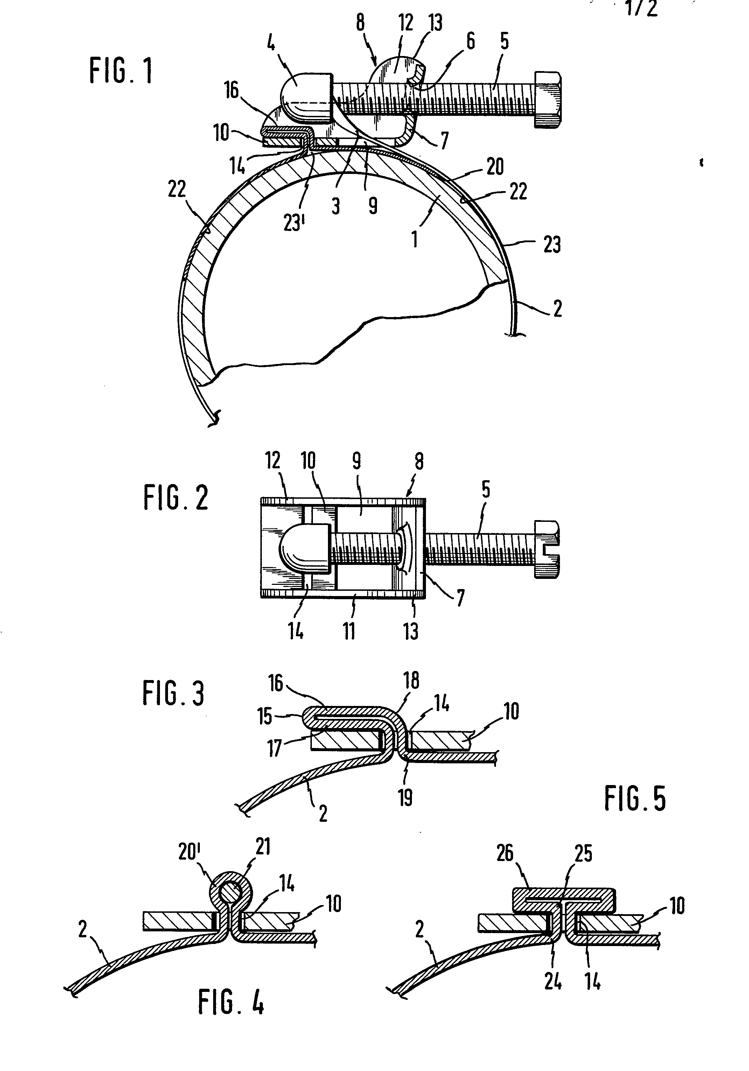

Im Boden 10 ist ein Querschlitz 14 vorgesehen, der sich über die gesamte Breite des Spanngehäuses 8 erstreckt und gewöhnlich etwas länger ist als die Breite des Spannbandes 2. Wenn jedoch das Spannband im Bereich des Spanngehäuses schmäler gemacht werden soll, so reicht es aus, daß der Querschlitz 14 auch entsprechend kürzer ist. Die Breite des Querschlitzes 14 entspricht, wie aus Fig. 1 bzw. Fig. 3 bis 5 ersichtlich ist, in etwa der doppelten Stärke des Spannbandes 2, so daß das Spannband zweimal nebeneinander durch den Querschlitz geführt werden kann.

Nach der in Fig. 1 bzw. Fig. 3 dargestellten Ausführungsform ist das Spannband 2 mit einem Abschnitt 15 durch den Querschlitz 14 hindurchgeführt und dann um annähernd 180° umgebogen, so daß es auf der Bodenwandung 10 in etwa aufliegt. Nach einer weiteren Biegung 50 um 180° liegt der Bandabschnitt 16 parallel zum Bandabschnitt 17 und zum Boden 10. Über eine Biegestelle 18 um etwa 90° wird dann das Spannband wieder durch den Querschlitz 14 hindurchgeführt und nach einer erneuten Abwinkelung 19 um etwa 90° am Boden 10 längsgeführt. Die Vorderkante 20 des das Spanngehäuse 8 lagernden Spannbandendabschnittes ist unterhalb eines Spannbandbereiches, der jenseits der Öffnung 9 liegt.

Da das zweimalige Hindurchführen des Spannbandes 2 durch den Querschlitz 4 eine senkrecht zur Spannschraubenlängsachse verlaufende, annähernd linienförmige Verbindung zwischen dem Spannband 2 und dem Spanngehäuse 8 schafft, kann das Spanngehäuse 8 um die Mittelachse des Querschlitzes 14 geringfügig verdreht werden und sich somit den zwangsläufig erfolgenden Verkantungen des Spanngehäuses beim Anziehen der Spannschraube anpassen. Da üblicherweise das Spanngehäuse nur eine geringfügig größere Stärke als das Spannband selbst aufweist, entsteht somit an der eben beschriebenen Stelle eine Art von Gelenk.

Bei der in Fig.4 dargestellten Ausführungsform ist das Spannband 2 einmal von unten nach oben und dann von oben nach unten durch den Querschlitz 14 hindurchgeführt und bildet oberhalb des Bodens 10 eine kreisförmige Ausbauchung 20'. In dieser Ausbauchung liegt ein Rundstift 21 oder ein ähnlich geformter Dorn, so daß eine Bewegung des Spannbandes in bezug auf den Boden 10 nicht möglich ist. Dieser Rundstift 21 oder ein gegebenenfalls auch unrunder Dorn, Stift oder dergleichen kann auch durch eine Öffnung in eine Seitenwand 11 oder 12 beim Einführen des Spannbandendes hineingeschoben werden; wenn danach die Umschlingung und die Rückführung durch den Schlitz 14 erfolgt, kann der Rundstift 21 nicht mehr durch die entsprechende Öffnung in der Seitenwand 11 oder 12 herausfallen, weil sich die Lage des Stiftes nach dem Anziehen des Spannbandendes so verändert hat, daß sich der Rundstift nicht mehr durch die entsprechende Öffnung herausziehen läßt. Auch bei dieser Ausführungsform ist die freie Querkante 20 des entsprechenden Spannbandendabschnittes so weit von der Öffnung 9 im Boden 10 des Spanngehäuses 8 entfernt, daß ein fast glatter Übergang von der Innenseite 22 des Spannbandes 2 ( in der Zeichnung links) zur Innenseite des (in der Zeichnung rechts dargestellten) Abschnitts 23 des Spannbandes 2 entsteht.

Da der Querschlitz 14 nur eine Breite hat, die geringfügig die doppelte Stärke des Spannbandes 2 überschreitet, entsteht unterhalb des Querschlitzes 14 zwischen den entsprechenden Spannbandendabschnitten nur eine geringfügige Einbuchtung 23', die noch weniger spürbar ist als der Übergang von der Querkante 20 zur Innenfläche 22 des Spannbandes 2.

Bei der in Fig. 5 dargestellten Ausführungsform ist das Spannband 2 zur Verbindung mit dem Spanngehäuse 8 bzw. mit dem Boden 10 des letzteren so geführt, daß das Band 2 über zwei Knickstellen 24 und 25 um etwa 180° gebogen wird, wobei der nächste Bandabschnitt 26 nach einer erneuten Abkröpfung um 180° parallel zur Bodenwandung 10 verläuft; nach einer spiegelbildgleichen Abkröpfung des Bandes 2 wird letzteres wieder unterhalb der Bodenwandung 10 längsgeführt, so daß die Querkante 20, wie in Fig. 1 dargestellt ist, außerhalb des Bereiches des Spanngehäuses unter dem Spannbandbereich 23 des Spannbandes 2 liegt.

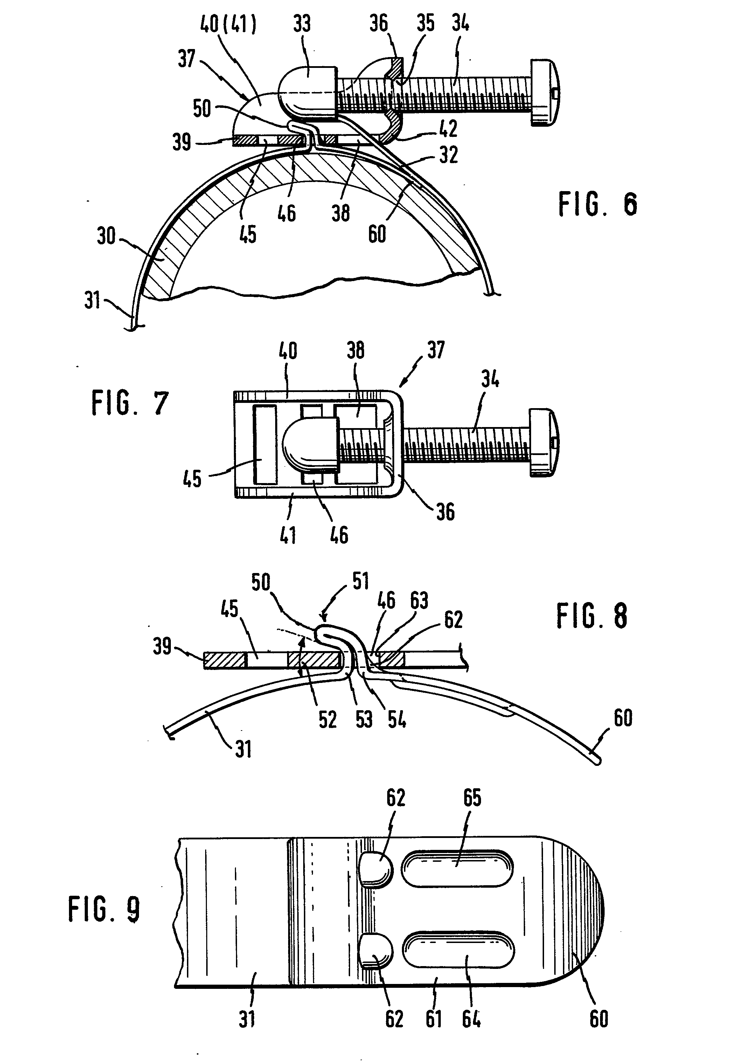

Nach der Ausführungsform nach Fig. 6 bis 9 ist wiederum um das Rohr oder den Schlauch 30 ein Spannband 31 geschlungen, von dem der Endabschnitt 32 in der Tasche 33 in Form einer Halbrundbuchse endet, welche wiederum von einem Hütchen eingespannt gehalten ist; dieses Hütchen besteht aus einem nahtlosen Metallstück und verhindert eine Verformung des Spannbandendabschnittes 32 bei einem Verdrehen bzw. Spannen durch die Spannschraube 34.

Die Spannschraube 34 ist im Gewinde 35 der Stirnwand 36 des Spanngehäuses 37 drehbar gelagert; die Spitze der Spannschraube 34 ragt in die vom Hütchen umgebene Halbrundbuchse 33 hinein.

Der Spannbandendabschnitt 32 ist durch eine Öffnung 38 im Boden 39 des Spanngehäuses 37 hindurchgeführt. Das Spanngehäuse 37 besteht aus einem Stück und wird in einem Arbeitsgang gefertigt, wobei die beiden Seitenwände 40 bzw. 41 in den Boden 39 z.B. über Abrundungen 42 einstückig ineinander übergehen.

Bei dem z.B. aus Metall bestehenden Spanngehäuse 37 sind die annähernd parallel zueinander verlaufenden Seitenwände 40, 41 soweit nach oben gezogen, daß z.B. Fingerverletzungen beim Spannen möglichst vermieden werden; die Herstellung des Spanngehäuses und auch die Verbindung zwischen dem Spannbandendabschnitt 32 mit der Spannschraube können auch auf andere Weise erfolgen.

Der Boden 39 weist dazu zwei parallel verlaufende Querschlitze 45 und 46 auf, die zum wahlweisen Einhängen des anderen Spannbandabschnittes vorgesehen sind; diese beiden Querschlitze 45 und 46 erstrecken sich über die gesamte Breite des Spanngehäuses 37 und sind etwas breiter als das Spannband 31. Sollte jedoch das Spannband 31 im Bereich des Spanngehäuses 37 eine geringere Breite haben, so reicht es aus, daß auch die Querschlitze 45 und 46 entsprechend kürzer sind.

Die Breite der Querschlitze 45 und 46 ist in etwa so bemessen, daß der abgekröpfte oder abgebogene Endabschnitt 50 des Spannbandes 31 leicht von unten in die Querschlitze 45 bzw. 46 hineingeschoben werden kann. Wie aus Fig. 6 bzw. auch aus Fig. 8 ersichtlich ist, ist das Spannband 31 in Wirkstellung zweimal durch den gleichen Querschlitz hindurchgeführt, so daß die hakenförmige Aufbiegung 51 (Fig. 8) vor dem Zusammensetzen von Spanngehäuse und Spannband erfolgt. Demzufolge können bei der dargestellten Ausführungsform das Spannband 31 mit der Halbrundbuchse 33 und der hakenförmigen Aufbiegung 51 gesondert vom Gehäuse gefertigt werden. Das Einhängen des Spannbandes kann an Ort und Stelle erfolgen.

Der Öffnungswinkel 52, den die Aufbiegung 51 bei der in den Fig. 6 und 8 dargestellten Ausführungsform aufweist, beträgt in etwa 140°. Die beiden annähernd parallel verlaufenden Spannbandendabschnitte 53 und 54 im Bereich des Querschlitzes 46 verlaufen annähernd senkrecht zum anschließenden ungebogenen Spannbandabschnitt, und zwar über eine Länge, die ca. das 1 1/2-fache der Stärke des Spanngehäusebodens 39 beträgt.

Um sicherzustellen, daß sich der Spannbandendabschnitt auch nicht aus seinem relativ breiten Querschlitz 46 löst, sind in dem zum freien Rand 60 des Spannbandes 31 weisenden Übergangsbereich zwischen der Aufbiegung 51 und dem rund und ungebogen verlaufenden Abschnitt 61 zwei Sicken 62 vorgesehen; diese Sicken füllen annähernd den Bereich zwischen dem Abschnitt 54 und dem rückwärtigen Rand 63 des Querschlitzes 46 aus und gewährleisten somit, daß sich nach dem Einhängen des aufgebogenen Spannbandabschnittes 51 dieser nicht - ohne das Spanngehäuse 37 in bezug auf das Spannband zu verkanten - löst. Im freien Endabschnitt 61 sind ferner noch zwei spannbandparallele Ausbauchungen 64 und 65 vorgesehen, die zur Verstärkung des entsprechenden Bandabschnittes dienen.

Wie deutlich aus Fig. 6 ersichtlich ist, deckt das Spannband auch jenseits des Schlitzes 46 mit dem unterlappenden Spannbandendabschnitt den Schlauch oder das Rohr 30 ab, so daß Verquetschungen, z.B. des Schlauches in diesem Bereich nicht erfolgen können.

Die Breite der Schlitze 45 und 46 kann in etwa so bemessen sein, daß die Aufbiegung 51 bequem in die entsprechenden Schlitze eingeführt werden kann; d.h. die Breite der Querschlitze ist annähernd gleich groß oder etwas geringer als die Länge des Endabschnitts 50.

PATENTANSPRÜCHE

1. Schelle für ein Spannband mit sich jeweils überlappenden Endabschnitten mit einer in einem Spanngehäuse drehbar gelagerten, den einen Spannbandendabschnitt relativ zum Spanngehäuse beweglich führenden Spannschraube, wobei der andere Spannbandendabschnitt am Spanngehäuseboden arretierbar ist, dadurch gekennzeichnet, daß der arretierbare Spannbandendabschnitt zweimal gegenläufig durch einen Querschlitz (14; 45, 46) od.dgl. im Spanngehäuseboden (10; 39) hindurchgeführt und durch auf der dem Spannband (2; 31) abgekehrten Seite des Spanngehäusebodens (10; 39) vorgesehene Abbiegungen oder Abkröpfungen (15-18; 21; 24-26; 50) gegen selbsttätiges Herausziehen arretiert ist.

2. Schelle nach Anspruch 1, dadurch gekennzeichnet, daß das Spannband im Bereich des Querschlitzes (14) oberhalb des Spanngehäusebodens (10) zweimal um ca. 180° annähernd gegenläufig abgebogen bzw. abgekröpft ist(Fig.1-3).

3. Schelle nach Anspruch 1 oder 2, dadurch gekennzeichnet, daß das Spannband (2) im Bereich des Querschlitzes (14) oberhalb des Spanngehäusebodens (10) viermal um ca. 180° abgebogen bzw. abgekröpft ist (Fig. 5).

4. Schelle nach Anspruch k, dadurch gekennzeichnet, daß das Spannband (2) im Bereich des Querschlitzes (14) oberhalb des Spanngehäusebodens (10) durch einen Dorn (21) od.dgl. gespreizt gehalten ist (Fig. 4).

5. Schelle nach Anspruch 1 oder folgende, dadurch gekennzeichnet, daß der Querschlitz (14) od.dgl. eine geringfügig größere Breite als die doppelte Stärke des Spannbandes (2) aufweist.

6. Schelle nach einem der Ansprüche 1 bis 4, dadurch gekennzeichnet, daß der arretierbare Spannbandendabschnitt im Querschlitz (45, 46) od.dgl. lose einhängbar ist und daß an der letzten, zum Spannbandende (60) weisenden Abbiege- oder Abkröpfungsstelle (54) des Spannbandendabschnittes Sicken (62), Rippen, Vorsprünge od. dgl. vorgesehen sind (Fig. 6 bis 9).

7. Schelle nach Anspruch 6, dadurch gekennzeichnet, daß mindestens zwei parallele Querschlitze (45, 46) od. dgl. zum wahlweisen Einhängen des Spannbandendabschnittes vorgesehen sind.

8. Schelle nach Anspruch 6 oder 7, dadurch gekennzeichnet, daß der verdoppelte in das Spanngehäuse hineinragende Spannbandabschnitt (50) einen Öffnungswinkel von ca. $100^o$ bis $170^o$, vorzugsweise $120^o$ bis $140^o$ aufweist.

9. Schelle nach Anspruch 6 oder folgende, dadurch gekennzeichnet, daß die an den Spannbandabschnitt anschließenden Abbiegungen oder Abkröpfungen (53) annähernd in einem Winkel von $80^o$ bis $100^o$ verlaufen und die in diesem Bereich verdoppelten Spannbandabschnitte mindestens um das 1,5-fache der Stärke des Spanngehäusebodens (39) annähernd geradlinig verlaufen.

0021256
1/2

FIG. 1

FIG. 2

FIG. 3

FIG. 4

FIG. 5

0021256

2/2

FIG. 6

FIG. 7

FIG. 8

FIG. 9

**Europäisches Patentamt**

**EUROPÄISCHER RECHERCHENBERICHT**

0021256

Nummer der Anmeldung

EP 80 10 3257.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 612 033 (HANDELSBOLAGET CHRIJA) <br> * Fig. 1 bis 4 * | 1,2 |
| | DE - A1 - 2 733 238 (RYUSYO INDUSTRIAL CO.) <br> * Fig. 3 * | 1,2 |
| | DE - U - 1 970 303 (M.KUTSCH) <br> * Fig. 1 * | 1,2 |
| | GB - A - 1 394 625 (H. SEHLBACH) <br> * Fig. 2 * | 1,2 |
| | CA - A - 867 018 (FERPLAS INDUSTRIES LTD.) <br> * Fig. 6 * | 1,2, 5 |
| | US - A - 3 124 376 (STOVALL) <br> * Fig. 2, 3 * | 1,2 |
| | US - A - 3 128 106 (ZINKEL, JR.) <br> * Fig. 3 * | 1,2 |
| | US - A - 3 128 516 (HALVARSON) <br> * Fig. 4 * | 1,2 |
| | US - A - 4 118 833 (KNOX et al.) <br> * Fig. 4 * <br> ./.. | 1,2 |

**KLASSIFIKATION DER ANMELDUNG (Int.Cl.3)**

F 16 B 2/08

**RECHERCHIERTE SACHGEBIETE (Int. Cl.3)**

B 65 D 63/00
F 16 B 2/08
F 16 B 7/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 08-10-1980 | ZAPP |

EPA form 1503.1 06.78

Europäisches
Patentamt

**EUROPÄISCHER RECHERCHENBERICHT**

0021256

EP 80 10 3257.4

- Seite 2 -

| Kategorie | Kennzeichnung des Dokuments mit Angabe, soweit erforderlich, der maßgeblichen Teile | betrifft Anspruch |
|---|---|---|
| | | |
| | US - A - 1 479 317 (PEIRCE) | 3 |
| | * Fig. 1 bis 4 * | |

**EINSCHLÄGIGE DOKUMENTE**

KLASSIFIKATION DER ANMELDUNG (Int.Cl.3)

RECHERCHIERTE SACHGEBIETE (Int. Cl.3)